# EUROPEAN PATENT SPECIFICATION

(11) **EP 3 300 436 B1**
(45) Date of publication and mention of the grant of the patent: **05.05.2021**
(21) Application number: 16799083.7
(22) Date of filing: 14.03.2016
(51) Int. Cl.: H04W 52/36, H04W 52/34, H04W 52/50, H04W 52/14

(54) **CELL POWER MANAGEMENT METHOD AND NETWORK NODE**
ZELLENLEISTUNGSVERWALTUNGSVERFAHREN UND NETZWERKKNOTEN
PROCÉDÉ DE GESTION DE PUISSANCE DE CELLULE ET NOEUD DE RÉSEAU

(30) Priority: 26.05.2015 CN 201510275388
(43) Date of publication of application: 28.03.2018
(73) Proprietor: Huawei Technologies Co., Ltd., Longgang District Shenzhen, Guangdong 518129 (CN)
(72) Inventor: LIAO, Junhua, Shenzhen Guangdong 518129 (CN); SOTEK, Karel, Shenzhen Guangdong 518129 (CN); XU, Kai, Shenzhen Guangdong 518129 (CN)
(74) Representative: Körber, Martin Hans
(86) International application number: PCT/CN2016/076271
(87) International publication number: WO 2016/188194

(56) References cited:
- EP-A1- 1 793 509
- CN-A- 102 281 619
- CN-A- 104 168 636
- CN-A- 105 101 384
- US-A1- 2013 178 221

## Description

### TECHNICAL FIELD

The present invention relates to the field of wireless communications technologies, and in particular, to a cell power management method and a network node.

### BACKGROUND

A mobile communications system is a continuous coverage network including cellular cells. A cell generally includes a Global System for Mobile Communications (GSM, Global System for Mobile Communication) cell, a Universal Mobile Telecommunications System (UMTS, Universal Mobile Telecommunications System) cell, and a Long Term Evolution (LTE, Long Term Evolution) network cell, that is, a G/U/L cell. A GSM cell is controlled by a base station controller (BSC, Base Station Controller), a UMTS cell is controlled by a radio network controller (RNC), and an LTE cell is controlled by a node base station (NodeB, Node Base Station) or an evolved node base station (eNodeB, Evolved Node Base Station).

When a frequency band is added to an original station, a total power of a same sector is increased, and if a radiant intensity is the same, a range of an exclusion zone (EZ, Exclusion Zone) is expanded. Consequently, an actual radiation requirement of the EZ cannot be met.

To resolve the problem, in the prior art, usually, a power of a G/U/L cell is manually configured, to ensure that a total power of G/U/L cells covered by a same sector meets a radiation requirement. However, in the existing power management method, to control radiation of a station, a transmit power configured for each G/U/L cell in the station needs to be limited within a planned value. As a result, a quantity of carriers deployed by an operator is limited. Alternatively, when an operator needs to deploy more carriers and therefore a maximum transmit power of a cell is reduced, a cell power is limited, and consequently, a corresponding downlink rate cannot be provided.

EP 1 793 509 A1 discloses a method for transmission power control in a single- or multi-carrier communications system, each carrier comprising a plurality of communication physical channels, and in which a maximum transmission power budget is distributed between the physical channels within one carrier and/or between carriers. The disclosed method comprises adding the digital physical channel signals belonging to each carrier; calculating the power of each digital carrier signal and adding the power of all carriers; comparing a resulting transmission power value (PC) to a certain threshold value (PT), if the transmission power value (PC) is lower than the threshold value (PT), calculating a margin of transmission power available (NU3) for each of the carriers; and sending said transmission power margin to at least one base band module (BB1 to BBn) in charge of transmitting physical channel signals for said carriers and said at least one base band module (BB 1 to BBn) using said transmission power margin (NU3) for transmitting extra physical channels (H2) in said carriers.

CN 102 281 619 A discloses a power allocation scheme which includes determining power usage information of a plurality of cells established on a same remote radio unit; and determining power usage information of the cell characterizing power usage of the cell after last power allocation. It is further determined the current allocated power of each cell, according to the determined power usage information of each cell and the last allocated power, wherein, the sum of the last allocated power of each cell is equal to the sum of the current allocated powers. A further step is allocating power to each cell according to the determined current allocated power of each cell.

### SUMMARY

This application provides a cell power management method and a network node, so as to resolve a problem in the prior art that a quantity of carriers cannot be limitedly increased without reducing a transmit power of a cell. A first aspect of this application provides a cell power management method according to claim 1.

A second aspect of the present invention provides a network node according to claim 2.

A third aspect of the present invention provides a network node according to claim 3.

It can be learned from the foregoing technical solution that, in the present invention, a maximum transmit power of a same sector is configured, and a transmit power of each cell is controlled to be not greater than a first threshold; when the same sector is in an initial state, a first power is allocated to each cell according to a first allocation policy; and when the same sector is in a connected mode, a second power is allocated to each cell according to a current power and a required power utilization rate that are of each cell, so that a mean power of each cell is not greater than a second threshold. This can implement flexible control of cell power and real-time allocation, and improve a power utilization rate of a cell and properness of power allocation.

### BRIEF DESCRIPTION OF DRAWINGS

FIG. 1 is a schematic flowchart of interaction between a network node and cells according to an embodiment;
FIG. 2 is a schematic diagram of a cell power management method according to an embodiment;
FIG. 3 is a schematic structural diagram of a network node according to an embodiment;
FIG. 4 is a schematic structural diagram of a control unit in a network node according to an embodiment;
FIG. 5 is an exemplary schematic structural diagram of a control unit in a network node; and FIG. 6 is another schematic structural diagram of a network node.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person skilled in the art based on the embodiments of the present invention without creative efforts shall fall within the protection scope of the present invention, which is defined by the appended claims. Embodiments not falling under the scope of the appended claims are to be considered as supporting examples.

In the specification, claims, and accompanying drawings of the present invention, the terms "first", "second", and so on are intended to distinguish between similar objects but do not necessarily indicate a specific order or sequence. It should be understood that the data termed in such a way are interchangeable in proper circumstances so that the embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, system, product, or device. The module division in this specification is merely logical function division and may be other division in actual implementation. For example, multiple modules may be combined or integrated into another system, or some features may be ignored or not performed. In addition, the displayed or discussed mutual couplings or direct couplings or communication connections may be implemented by using some interfaces. The indirect couplings or communication connections between the modules may be implemented in electronic or other forms. This is not limited in this specification. In addition, the modules or submodules described as separate parts may or may not be physically separate, may or may not be physical modules, or may be distributed on multiple circuit modules. Some or all of the modules may be selected according to actual needs to achieve the objectives of the solutions of the embodiments in the present invention.

The embodiments of the present invention provide a cell management method and a network node that are applied to the field of wireless communications, so as to implement flexible control of cell power and real-time allocation, thereby improving a power utilization rate of a cell and properness of power allocation. The cell management method and the network node are mainly applied to a multi-play application scenario, that is, a signal coverage scenario having a large quantity of users, heavy traffic, and a high demand for data services in a dense urban area or a hotspot region. A specific application scenario may be a multi-band, multi-standard, and multi-carrier (mBSC, Multi-Band, Multi-Standard, Multi-Carriers) system and the like, may be multiple networks of a same operator, or may be multiple different networks of different operators. This is not specifically limited.

In this specification, a cell in a same sector includes at least one of a GSM cell, an LTE cell, or a UMTS cell. A specific type of the cell and a quantity of cells are selected according to an actual scenario. This is not limited in this specification.

It may be understood that, a GSM cell reports, by means of a BSC, an actual power usage value of the GSM cell and a power value that needs to be allocated to the GSM cell. An LTE cell reports, by means of a base station, an actual power usage value of the LTE cell and a power value that needs to be allocated to the LTE cell. A UMTS cell reports, by means of an RNC, an actual power usage value of the UMTS cell and a power value that needs to be allocated to the UMTS cell. Therefore, the network node performs proper and dynamic power allocation according to a received power usage value and a required power value, thereby meeting a power requirement of each cell in a same sector.

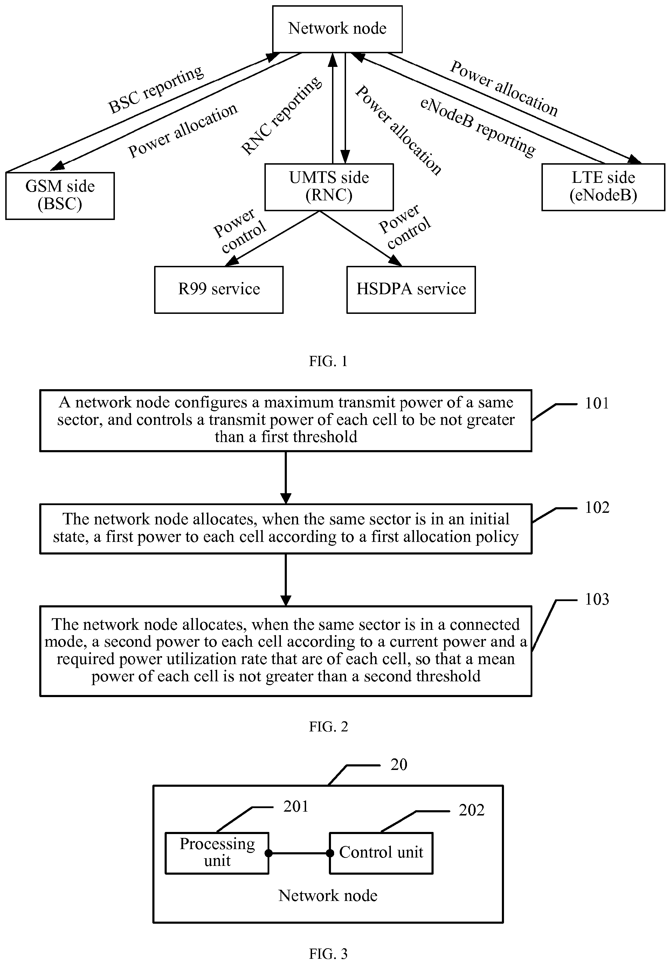

In this specification, the network node is mainly responsible for power sharing and allocation, to ensure that radiation emitted to the surrounding by a station for which the network node is responsible falls within a standard range, and provides downlink services to cells in a same sector. Refer to FIG. 1 for specific interaction between the network node and cells.

Referring to FIG. 2, an embodiment of the present invention provides a cell power management method. The method is applied to a network node managing a power of a same sector. The same sector includes multiple cells. The same sector belongs to the network node. The method includes the following steps.

101: The network node configures a maximum transmit power of the same sector, and controls a transmit power of each cell to be not greater than a first threshold.

It may be understood that, the network node does not perform power control on a GSM primary band carrier power, an LTE pilot channel power, a UMTS pilot channel power, and a common channel power, which are kept unchanged. The network node controls only a downlink transmit power and an uplink transmit power of each cell.

102: The network node allocates, when the same sector is in an initial state, a first power to each cell according to a first allocation policy.

When the cells are all in an initial state, the first power is allocated to each cell, to ensure that elementary functions such as a voice service of each cell can be normally performed.

103: The network node allocates, when the same sector is in a connected mode, a second power to each cell according to a current power and a required power utilization rate that are of each cell, so that a mean power of each cell is not greater than a second threshold.

The power utilization rate is reported to the network node by each cell in the same sector periodically.

In actual application, after allocating corresponding powers to cells, the network node delivers the powers to the cells in a form of a message. The message includes parameter information used to instruct a cell to obtain and adjust a downlink transmit power of the cell according to the message. Specifically, the parameter information may include a cell power control parameter, resource allocation information, a coding rate, signal-to-noise ratio compensation information, or the like. This is not specifically limited.

Specifically, after obtaining a power allocated by the network node, a G/U/L cell in the same sector controls a power of a carrier in the cell.

After obtaining a power authorized by the network node, a GSM cell allocates the authorized power to each carrier. A carrier that does not obtain the authorized power is not enabled. The GSM cell allocates all traffic to one carrier according to a priority by modifying a channel allocation algorithm of GSM.

After an LTE cell obtains a power authorized by the network node, to reduce powers of some resource blocks (RB, Resource Block), a signaling message of reducing the powers needs to be sent to a user terminal. In this way, a power may be changed by reducing a quantity of RBs that are used.

After obtaining a power authorized by the network node, a UMTS cell triggers load reference (LDR, Load Reference) or over load control (OLC, Over Load Control) based on different condition thresholds.

In this embodiment of the present invention, a maximum transmit power of the same sector is configured, and a transmit power of each cell is controlled to be not greater than a first threshold; when the same sector is in an initial state, a first power is allocated to each cell according to a first allocation policy; and when the same sector is in a connected mode, a second power is allocated to each cell according to a current power and a required power utilization rate that are of each cell, so that a mean power of each cell is not greater than a second threshold, thereby ensuring that each cell can normally provide a corresponding downlink rate to a user, and extra power in a period of time may be allocated to another cell that needs more power. This can implement flexible control of cell power and real-time allocation, and improve a power utilization rate of a cell and properness of power allocation.

When the network node determines that a sum of power utilization rates of all the cells in the same sector is not less than the maximum transmit power, the allocating, by the network node, a second power to each cell according to a current power and a required power utilization rate that are of each cell specifically includes one of the following cases:
reducing an original power utilization rate of each cell in descending order of priorities of the cells at an equal ratio; or
determining a first cell whose power utilization rate is greater than or equal to the second threshold and a second cell whose power utilization rate is less than a third threshold; and
reducing a third power of the first cell and a fourth power of the second cell according to a first policy.

The reducing a third power of the first cell and a fourth power of the second cell according to a first policy specifically includes:
calculating a first total power value that needs to be reduced, and calculating a sum of the third power and the fourth power to obtain a second total power value;
reducing the third power according to the first total power value and according to a ratio of the third power to the second total power value; and
reducing the fourth power according to a ratio of the fourth power to the second total power value.

Optionally, based on the foregoing embodiment corresponding to FIG. 2, in a third optional embodiment of this embodiment of the present invention, when it is determined that status information of the same sector changes, the allocating, by the network node when the same sector is in an initial state, a second power to each cell according to a current power and a required power utilization rate that are of each cell includes:
allocating, by the network node, the second power to each cell according to a second allocation policy.

Optionally, based on the third optional embodiment, in a fourth optional embodiment of this embodiment of the present invention, the status information includes configuration information of each cell and a networking usage status in the same sector, and before the allocating, by the network node when it is determined that status information of the same sector changes, the second power to each cell according to a second allocation policy, the method further includes:
in a preset time, determining, by the network node according to cell status information reported by each cell, a target cell set whose power needs to be adjusted, where the target cell set includes a first cell set whose power needs to be reduced and a second cell set whose power needs to be increased.

A change of the configuration information mainly includes a power configuration change, disabling a power control function of a station, enabling a power control function of a station, or the like. The networking usage status includes cell addition, cell exit, service addition, service reduction, or the like. Specific configuration information and a specific networking status are not limited in this specification.

Optionally, based on the fourth optional embodiment, in a fifth optional embodiment of this embodiment of the present invention, the allocating, by the network node when it is determined that status information of the same sector changes, the second power to each cell according to a second allocation policy includes at least one of the following cases:
reducing a power utilization rate of each cell in the first cell set according to a second policy; or
increasing a power utilization rate of each cell in the second cell set according to a third policy. Optionally, based on the fifth optional embodiment, in a sixth optional embodiment of this embodiment of the present invention, the reducing a power utilization rate of each cell in the first cell set according to a second policy includes one of the following cases:
reducing the power utilization rate of each cell in the first cell set in descending order of priorities of the cells at an equal ratio; or
reducing the power utilization rate of each cell in the first cell set according to a fourth policy.

Optionally, based on the sixth optional embodiment, in a seventh optional embodiment of this embodiment of the present invention, the reducing the power utilization rate of each cell in the first cell set according to a fourth policy specifically includes:
calculating a third total power value that is of the first cell set and that needs to be reduced, and
calculating a current fourth total power value of the first cell set; and
reducing a power of each cell in the first cell set according to the third total power value and
according to a ratio of the power of each cell in the first cell set to the fourth total power value.

Optionally, based on the fifth optional embodiment, in an eighth optional embodiment of this embodiment of the present invention, the increasing a power utilization rate of each cell in the second cell set according to a third policy includes one of the following cases:
increasing the power utilization rate of each cell in the second cell set in descending order of priorities of the cells at an equal ratio; or
increasing the power utilization rate of each cell in the second cell set according to a fifth policy.

Optionally, based on the eighth optional embodiment, in a ninth optional embodiment of this embodiment of the present invention, the increasing the power utilization rate of each cell in the second cell set according to a fifth policy includes:
calculating, by the network node, a fifth total power value that needs to be increased, and
calculating a current sixth total power value of the first cell set; and
increasing a power of each cell in the second cell set according to the fifth total power value and
according to a ratio of the power of each cell in the second cell set to the sixth total power value.

Optionally, based on any one of the foregoing embodiment corresponding to FIG. 2 or the first to the ninth optional embodiments, in a tenth optional embodiment of this embodiment of the present invention, the allocating a first power to each cell according to a first allocation policy includes one of the following cases:
allocating, by the network node, a power to each cell in descending order of priorities of the cells at an equal ratio; or
allocating a basic power to each cell, where the basic power corresponds to a service type and a network type.

Optionally, based on the foregoing embodiment corresponding to FIG. 2, and the first to the ninth optional embodiments, in an eleventh optional embodiment of this embodiment of the present invention, the method further includes:
calculating, by the network node, a sum of actually used powers of all the cells in the same sector periodically, and locally saving the sum of the actually used powers; and
determining fluctuation of power usage of the same sector according to the sum of the actually used powers that is calculated periodically, and allocating a total power needed by the same sector according to the fluctuation.

The cell power management method in this embodiment of the present invention is described above by using an example. Referring to FIG. 3, a network node in an embodiment of the present invention is described below in detail. The network node 20 is configured to control a power of a same sector. The same sector includes multiple cells. The same sector belongs to the network node 20. The network node 20 includes:
a processing unit 201, configured to configure a maximum transmit power of the same sector; and
a control unit 202, configured to control a transmit power of each cell to be not greater than a first threshold, where
   the control unit 202 is further configured to: allocate, when the same sector is in an initial state, a first power to each cell according to a first allocation policy; and
   allocate, when the same sector is in a connected mode, a second power to each cell according to a current power and a required power utilization rate that are of each cell, so that a mean power of each cell is not greater than a second threshold.

In this embodiment of the present invention, the processing unit 201 configures a maximum transmit power of a same sector, and the control unit 202 controls a transmit power of each cell to be not greater than a first threshold; when the same sector is in an initial state, a first power is allocated to each cell according to a first allocation policy; and when the same sector is in a connected mode, a second power is allocated to each cell according to a current power and a required power utilization rate that are of each cell, so that a mean power of each cell is not greater than a second threshold, thereby ensuring that each cell can normally provide a corresponding downlink rate to a user, and extra power in a period of time may be allocated to another cell that needs more power. This can implement flexible control of cell power and real-time allocation, and improve a power utilization rate of a cell and properness of power allocation.

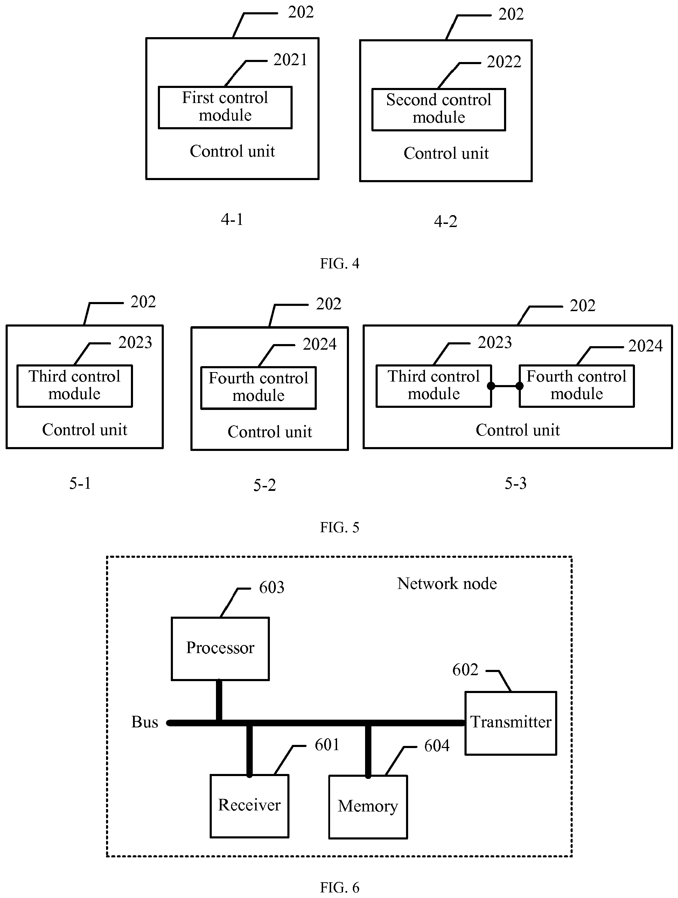

Optionally, based on the foregoing embodiment corresponding to FIG. 3, in a first optional embodiment of this embodiment of the present invention, referring to FIG. 4, when the processing unit 201 determines that a sum of power utilization rates of all the cells in the same sector is not less than the maximum transmit power, the control unit 202 specifically includes one of the following modules:
a first control module 2021, configured to reduce an original power utilization rate of each cell in descending order of priorities of the cells at an equal ratio; or
a second control module 2022, configured to: after the processing unit 201 determines that a first cell whose power utilization rate is greater than or equal to the second threshold and a second cell whose power utilization rate is less than a third threshold, reduce a third power of the first cell and
a fourth power of the second cell according to a first policy.

Optionally, based on the first optional embodiment, in a second optional embodiment of this embodiment of the present invention, the second control module 2022 is specifically configured to:
calculate, by using the processing unit, a first total power value that needs to be reduced; calculate a sum of the third power and the fourth power to obtain a second total power value; and reduce the third power according to the first total power value and according to a ratio of the third power to the second total power value; and
reduce the fourth power according to a ratio of the fourth power to the second total power value.

Optionally, based on the first optional embodiment, in a third optional embodiment of this embodiment of the present invention, when the processing unit 201 determines that status information of the same sector changes, the control unit 202 is further configured to:
allocate the second power to each cell according to a second allocation policy.

Optionally, based on the third optional embodiment, in a fourth optional embodiment of this embodiment of the present invention, the status information includes configuration information of each cell and a networking usage status in the same sector, and the processing unit 201 is further configured to:
in a preset time, determine, according to cell status information reported by each cell, a target cell set whose power needs to be adjusted, where the target cell set includes a first cell set whose
power needs to be reduced and a second cell set whose power needs to be increased.

Optionally, based on the fourth optional embodiment, in a fifth optional embodiment of this embodiment of the present invention, when it is determined that status information of the same sector changes, the control unit 202 includes at least one of the following modules:
a third control module 2023, configured to reduce a power utilization rate of each cell in the first cell set according to a second policy; or
a fourth control module 2024, configured to increase a power utilization rate of each cell in the second cell set according to a third policy.

Optionally, based on the fifth optional embodiment, in a sixth optional embodiment of this embodiment of the present invention, the third control module 2023 is specifically configured to perform one of the following steps:
reducing the power utilization rate of each cell in the first cell set in descending order of priorities of the cells at an equal ratio; or
reducing the power utilization rate of each cell in the first cell set according to a fourth policy.

Optionally, based on the sixth optional embodiment, in a seventh optional embodiment of this embodiment of the present invention, the third control module 2023 is specifically configured to:
calculate, by using the processing unit 201, a third total power value that is of the first cell set and
that needs to be reduced; and after calculating a current fourth total power value of the first cell set, reduce a power of each cell in the first cell set according to the third total power value and
according to a ratio of the power of each cell in the first cell set to the fourth total power value.

Optionally, based on the fifth optional embodiment, in an eighth optional embodiment of this embodiment of the present invention, the fourth control module 2024 is specifically configured to perform one of the following steps:
increasing the power utilization rate of each cell in the second cell set in descending order of priorities of the cells at an equal ratio; or
increasing the power utilization rate of each cell in the second cell set according to a fifth policy.

Optionally, based on the eighth optional embodiment, in a ninth optional embodiment of this embodiment of the present invention, the fourth control module 2024 is specifically configured to perform one of the following steps:
calculating, by using the processing unit 201, a fifth total power value that needs to be increased; and after calculating a current sixth total power value of the first cell set, increasing a power of each cell in the second cell set according to the fifth total power value and according to a ratio of the power of each cell in the second cell set to the sixth total power value.

Optionally, based on the foregoing embodiment corresponding to FIG. 3 and the first to the ninth optional embodiments, in a tenth optional embodiment of this embodiment of the present invention, the control unit 202 is specifically further configured to perform one of the following steps:
allocating a power to each cell in descending order of priorities of the cells at an equal ratio; or
allocating a basic power to each cell, where the basic power corresponds to a service type and a network type.

Optionally, based on the foregoing embodiment corresponding to FIG. 3 and the first to the ninth optional embodiments, in an eleventh optional embodiment of this embodiment of the present invention, the processing unit 201 is further configured to:
calculate a sum of actually used powers of all the cells in the same sector periodically, and locally save the sum of the actually used powers; and
determine fluctuation of power usage of the same sector according to the sum of the actually used powers that is calculated periodically; and
the control unit 202 is further configured to allocate a total power needed by the same sector according to the fluctuation determined by the processing unit 201.

A further example provides a computer storage medium. The medium stores a program. When the program is executed, some or all steps in the foregoing cell power management method are performed.

The present invention further provides a computer storage medium. The medium stores a program. When the program is executed, some or all steps in a cell power management method that is performed by the foregoing network node are performed.

FIG. 6 is another schematic structural diagram of a network node 60 according to an embodiment of the present invention. The network node 60 may include at least one network interface or another communications interface, at least one receiver 601, at least one transmitter 602, at least one processor 603, and a memory 604, to implement connection and communication between the apparatuses, and implement communication and connection between a system gateway and at least one another network element by using at least one network interface (which may be a wired network interface or a wireless network interface). The Internet, a wide area network, a local network, a metropolitan area network or the like may be used.

The memory 604 may include a read-only memory and a random access memory, and provide an instruction and data to the processor 603. A part of the memory 604 may further include a high-speed random access memory (RAM, Random Access Memory), or may further include a non-volatile memory (non-volatile memory).

The memory 604 stores the following elements: executable modules, or data structures, or a subset thereof, or an extended set thereof;
operation instructions, including various operation instructions, and used to implement various operations; and
an operating system, including various system programs, and used to implement various fundamental services and process hardware-based tasks.

In this embodiment of the present invention, the method is applied to a network node managing a power of a same sector. The same sector includes multiple cells. The same sector belongs to the network node. The processor 603 performs the following operations by calling an operation instruction (the operation instruction may be stored in the operating system) stored in the memory 604:
configuring a maximum transmit power of the same sector, and controlling a transmit power of each cell to be not greater than a first threshold;
allocating, when the same sector is in an initial state, a first power to each cell according to a first allocation policy; and
allocating, when the same sector is in a connected mode, a second power to each cell according to a current power and a required power utilization rate that are of each cell, so that a mean power of
each cell is not greater than a second threshold.

In some implementations, when it is determined that a sum of power utilization rates of all the cells in the same sector is not less than the maximum transmit power, the processor 603 may further perform one of the following steps:
reducing an original power utilization rate of each cell in descending order of priorities of the cells at an equal ratio; or
determining a first cell whose power utilization rate is greater than or equal to the second threshold and a second cell whose power utilization rate is less than a third threshold; and reducing a third power of the first cell and a fourth power of the second cell according to a first policy.

In some implementations, the processor 603 may further perform the following steps:
calculating a first total power value that needs to be reduced, and calculating a sum of the third power and the fourth power to obtain a second total power value;
reducing the third power according to the first total power value and according to a ratio of the third power to the second total power value; and
reducing the fourth power according to a ratio of the fourth power to the second total power value.

In some implementations, when it is determined that status information of the same sector changes, when the same sector is in a connected mode, the processor 603 may further perform the following step:
allocating a third power to each cell according to a second allocation policy.

In some implementations, the status information includes configuration information of each cell and a networking usage status in the same sector, the processor 603 may further perform the following step:
in a preset time, determining, according to cell status information reported by each cell, a target cell set whose power needs to be adjusted, where the target cell set includes a first cell set whose power needs to be reduced and a second cell set whose power needs to be increased.

In some implementations, the processor 603 may further perform at least one of the following steps:
reducing a power utilization rate of each cell in the first cell set according to a second policy; or
increasing a power utilization rate of each cell in the second cell set according to a third policy.

In some implementations, the processor 603 may further perform at least one of the following steps:
reducing the power utilization rate of each cell in the first cell set in descending order of priorities of the cells at an equal ratio; or
reducing the power utilization rate of each cell in the first cell set according to a fourth policy.

In some implementations, the processor 603 may further perform the following steps:
calculating a third total power value that is of the first cell set and that needs to be reduced, and
calculating a current fourth total power value of the first cell set; and
reducing a power of each cell in the first cell set according to the third total power value and
according to a ratio of the power of each cell in the first cell set to the fourth total power value.

In some implementations, the processor 603 may further specifically perform one of the following steps:
increasing the power utilization rate of each cell in the second cell set in descending order of priorities of the cells at an equal ratio; or
increasing the power utilization rate of each cell in the second cell set according to a fifth policy.

In some implementations, the processor 603 may further specifically perform the following steps:
calculating a fifth total power value that needs to be increased, and calculating a current sixth total power value of the first cell set; and
increasing a power of each cell in the second cell set according to the fifth total power value and
according to a ratio of the power of each cell in the second cell set to the sixth total power value.

In some implementations, the processor 603 may specifically further perform one of the following steps:
allocating, by the network node, a power to each cell in descending order of priorities of the cells at an equal ratio; or
allocating a basic power to each cell, where the basic power corresponds to a service type and a network type.

In some implementations, the processor 603 may further specifically perform the following steps:
calculating a sum of actually used powers of all the cells in the same sector periodically, and
locally saving the sum of the actually used powers; and
determining fluctuation of power usage of the same sector according to the sum of the actually used powers that is calculated periodically, and allocating a total power needed by the same sector according to the fluctuation.

In the foregoing embodiments, the description of each embodiment has respective focuses. For a part that is not described in detail in an embodiment, refer to related descriptions in other embodiments.

It may be clearly understood by a person skilled in the art that, for the purpose of convenient and brief description, for a detailed working process of the foregoing system, apparatus, and unit, refer to a corresponding process in the foregoing method embodiments, and details are not described herein.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The cell power management method and the network node provided in the present invention are described above in detail. In this specification, specific examples are used to describe the principle and implementation manners of the present invention, and the description of the embodiments is only intended to help understand the method and core idea of the present invention. Meanwhile, a person of ordinary skill in the art may, based on the idea of the present invention, make modifications with respect to the specific implementation manners and the application scope. Therefore, the content of this specification shall not be construed as a limitation to the present invention.

## Claims

1. A cell power management method, wherein the method is applied to a network node managing a power of a same sector, the same sector comprises multiple cells, the same sector belongs to the network node, and the method comprises:
configuring (101), by the network node, a maximum transmit power of the same sector, and controlling a transmit power of each cell to be not greater than a first threshold, wherein the network node does not perform power control on a GSM primary band carrier power, an LTE pilot channel power, a UMTS pilot channel power, and a common channel power;
allocating (102), by the network node when the same sector is in an initial state, a first power to each cell according to a first allocation policy, wherein the first allocation policy comprises allocating power to each cell in descending order of priorities of the cells at an equal ratio or allocating a basic power to each cell, where the basic power corresponds to a service type and a network type; and
allocating (103), by the network node when the same sector is in a connected mode, a second power to each cell according to a current power and a required power utilization rate that are of each cell, so that a mean power of each cell is not greater than a second threshold,
**characterized in**
when the network node determines that a sum of power utilization rates of all the cells in the same sector is not less than the maximum transmit power, the allocating, by the network node, a second power to each cell according to a current power and a required power utilization rate that are of each cell specifically comprises one of the following cases:
reducing an original power utilization rate of each cell in descending order of priorities of the cells at an equal ratio; or
determining a first cell whose power utilization rate is greater than or equal to the second threshold and a second cell whose power utilization rate is less than a third threshold; and reducing a third power of the first cell and a fourth power of the second cell according to a first policy, wherein the reducing a third power of the first cell and a fourth power of the second cell according to a first policy specifically comprises:
calculating a first total power value that needs to be reduced, and calculating a sum of the third power and the fourth power to obtain a second total power value;
reducing the third power according to the first total power value and according to a ratio of the third power to the second total power value; and
reducing the fourth power according to a ratio of the fourth power to the second total power value.

2. A first network node, wherein the network node is configured to control a power of a same sector, the same sector comprises multiple cells, the same sector belongs to the network node, and the network node comprises:
a processing unit (201), configured to configure a maximum transmit power of the same sector, wherein the network node does not perform power control on a GSM primary band carrier power, an LTE pilot channel power, a UMTS pilot channel power, and a common channel power; and
a control unit (202), configured to control a transmit power of each cell to be not greater than a first threshold, wherein
the control unit (202) is further configured to: allocate, when the same sector is in an initial state, a first power to each cell according to a first allocation policy, wherein the first allocation policy comprises allocating power to each cell in descending order of priorities of the cells at an equal ratio or allocating a basic power to each cell, where the basic power corresponds to a service type and a network type; and
allocate, when the same sector is in a connected mode, a second power to each cell according to a current power and a required power utilization rate that are of each cell, so that a mean power of each cell is not greater than a second threshold,
**characterized in**
**that** the control unit (202) comprises a first control module (2021), wherein the control module (202) is further configured to operate the first control module (2021), when the processing unit (201) determines that a sum of power utilization rates of all the cells in the same sector is not less than the maximum transmit power, and wherein
the first control module (2021) is configured to reduce an original power utilization rate of each cell in descending order of priorities of the cells at an equal ratio.

3. A second network node, wherein the network node is configured to control a power of a same sector, the same sector comprises multiple cells, the same sector belongs to the network node, and the network node comprises:
a processing unit (201), configured to configure a maximum transmit power of the same sector, wherein the network node does not perform power control on a GSM primary band carrier power, an LTE pilot channel power, a UMTS pilot channel power, and a common channel power; and
a control unit (202), configured to control a transmit power of each cell to be not greater than a first threshold, wherein
the control unit (202) is further configured to: allocate, when the same sector is in an initial state, a first power to each cell according to a first allocation policy, wherein the first allocation policy comprises allocating power to each cell in descending order of priorities of the cells at an equal ratio or allocating a basic power to each cell, where the basic power corresponds to a service type and a network type; and
allocate, when the same sector is in a connected mode, a second power to each cell according to a current power and a required power utilization rate that are of each cell, so that a mean power of each cell is not greater than a second threshold,
**characterized in**
**that** the control unit (202) comprises a second control module (2022), wherein the control module is further configured to operate the second control module, when the processing unit (201) determines that a sum of power utilization rates of all the cells in the same sector is not less than the maximum transmit power, and wherein
the second control module (2022) is configured to: after the processing unit (201) determines that a first cell whose power utilization rate is greater than or equal to the second threshold and a second cell whose power utilization rate is less than a third threshold, reduce a third power of the first cell and a fourth power of the second cell according to a first policy, wherein the second control module (2022) is specifically configured to:
calculate, by using the processing unit (201), a first total power value that needs to be reduced; calculate a sum of the third power and the fourth power to obtain a second total power value;
reduce the third power according to the first total power value and according to a ratio of the third power to the second total power value; and
reduce the fourth power according to a ratio of the fourth power to the second total power value.

## Patentansprüche

1. Zellenleistungs-Verwaltungsverfahren, wobei das Verfahren auf einen Netzwerkknoten angewandt wird, der eine Leistung eines gleichen Sektors verwaltet, wobei der gleiche Sektor mehrere Zellen umfasst, der gleiche Sektor zu dem Netzwerkknoten gehört, und das Verfahren Folgendes umfasst:
Konfigurieren (101), durch den Netzwerkknoten, einer maximalen Sendeleistung des gleichen Sektors, und Steuern einer Sendeleistung jeder Zelle, dass sie nicht größer als ein erster Schwellenwert ist, wobei der Netzwerkknoten keine Leistungssteuerung an einer GSM-Primärbandträgerleistung, einer LTE-Pilotkanalleistung, einer UMTS-Pilotkanalleistung und einer gemeinsamen Kanalleistung durchführt;
Zuteilen (102), durch den Netzwerkknoten, wenn sich der gleiche Sektor in einem Anfangszustand befindet, einer ersten Leistung zu jeder Zelle gemäß einer ersten Zuteilungsrichtlinie, wobei die erste Zuteilungsrichtlinie Zuteilen der Leistung zu jeder Zelle in absteigender Reihenfolge der Prioritäten der Zellen in einem gleichen Verhältnis, oder Zuteilen einer Grundleistung zu jeder Zelle umfasst, wobei die Grundleistung einem Diensttyp und einem Netzwerktyp entspricht; und
Zuteilen (103), durch den Netzwerkknoten, wenn der gleiche Sektor sich in einem verbundenen Modus befindet, einer zweiten Leistung zu jeder Zelle gemäß einer aktuellen Leistung und einer erforderlichen Leistungsnutzungsrate, die von jeder Zelle stammen, so dass eine mittlere Leistung jeder Zelle nicht größer als ein zweiter Schwellenwert ist,
**gekennzeichnet durch**,
wenn der Netzwerkknoten bestimmt, dass eine Summe der Leistungsnutzungsraten aller Zellen in dem gleichen Sektor nicht kleiner als die maximale Sendeleistung ist, die Zuteilung, **durch** den Netzwerkknoten, einer zweiten Leistung zu jeder Zelle gemäß einer aktuellen Leistung und einer erforderlichen Leistungsnutzungsrate, die von jeder Zelle stammen, speziell einen der folgenden Fälle umfasst:
Reduzieren einer ursprünglichen Leistungsnutzungsrate jeder Zelle in absteigender Reihenfolge der Prioritäten der Zellen in einem gleichen Verhältnis; oder
Bestimmen einer ersten Zelle, deren Leistungsnutzungsrate größer als oder gleich dem zweiten Schwellenwert ist, und einer zweiten Zelle, deren Leistungsnutzungsrate kleiner als ein dritter Schwellenwert ist; und Reduzieren einer dritten Leistung der ersten Zelle und einer vierten Leistung der zweiten Zelle gemäß einer ersten Richtlinie, wobei das Reduzieren einer dritten Leistung der ersten Zelle und einer vierten Leistung der zweiten Zelle gemäß einer ersten Richtlinie speziell Folgendes umfasst:
Berechnen eines ersten Gesamtleistungswertes, der reduziert werden muss, und Berechnen einer Summe der dritten Leistung und der vierten Leistung, um einen zweiten Gesamtleistungswert zu erhalten;
Reduzieren der dritten Leistung gemäß dem ersten Gesamtleistungswert und gemäß einem Verhältnis der dritten Leistung zu dem zweiten Gesamtleistungswert; und
Reduzieren der vierten Leistung gemäß einem Verhältnis der vierten Leistung zu dem zweiten Gesamtleistungswert.

2. Erster Netzwerkknoten, wobei der Netzwerkknoten dazu ausgelegt ist, eine Leistung eines gleichen Sektors zu steuern, wobei der gleiche Sektor mehrere Zellen umfasst, der gleiche Sektor zu dem Netzwerkknoten gehört, und der Netzwerkknoten Folgendes umfasst:
eine Verarbeitungseinheit (201), die dazu ausgelegt ist, eine maximale Sendeleistung des gleichen Sektors zu konfigurieren, wobei der Netzwerkknoten keine Leistungssteuerung an einer GSM-Primärbandträgerleistung, einer LTE-Pilotkanalleistung, einer UMTS-Pilotkanalleistung und einer gemeinsamen Kanalleistung durchführt; und
eine Steuereinheit (202), die dazu ausgelegt ist, eine Sendeleistung jeder Zelle zu steuern, dass sie nicht größer als ein erster Schwellenwert ist, wobei
die Steuereinheit (202) ferner für Folgendes ausgelegt ist: Zuteilen, wenn der gleiche Sektor sich in einem Anfangszustand befindet, einer ersten Leistung zu jeder Zelle gemäß einer ersten Zuteilungsrichtlinie, wobei die erste Zuteilungsrichtlinie Zuteilen der Leistung zu jeder Zelle in absteigender Reihenfolge der Prioritäten der Zellen in einem gleichen Verhältnis, oder Zuteilen einer Grundleistung zu jeder Zelle umfasst, wobei die Grundleistung einem Diensttyp und einem Netzwerktyp entspricht; und
Zuteilen, wenn der gleiche Sektor sich in einem verbundenen Modus befindet, einer zweiten Leistung zu jeder Zelle gemäß einer aktuellen Leistung und einer erforderlichen Leistungsnutzungsrate, die von jeder Zelle stammen, so dass eine mittlere Leistung jeder Zelle nicht größer als ein zweiter Schwellenwert ist,
**gekennzeichnet dadurch,**
**dass** die Steuereinheit (202) ein erstes Steuermodul (2021) umfasst, wobei das Steuermodul (202) ferner dazu ausgelegt ist, das erste Steuermodul (2021) zu betreiben, wenn die Verarbeitungseinheit (201) bestimmt, dass eine Summe der Leistungsnutzungsraten aller Zellen in dem gleichen Sektor nicht kleiner als die maximale Sendeleistung ist, und wobei
das erste Steuermodul (2021) dazu ausgelegt ist, eine ursprüngliche Leistungsnutzungsrate jeder Zelle in absteigender Reihenfolge der Prioritäten der Zellen in einem gleichen Verhältnis zu reduzieren.

3. Zweiter Netzwerkknoten, wobei der Netzwerkknoten dazu ausgelegt ist, eine Leistung eines gleichen Sektors zu steuern, wobei der gleiche Sektor mehrere Zellen umfasst, der gleiche Sektor zu dem Netzwerkknoten gehört, und der Netzwerkknoten Folgendes umfasst:
eine Verarbeitungseinheit (201), die dazu ausgelegt ist, eine maximale Sendeleistung des gleichen Sektors zu konfigurieren, wobei der Netzwerkknoten keine Leistungssteuerung an einer GSM-Primärbandträgerleistung, einer LTE-Pilotkanalleistung, einer UMTS-Pilotkanalleistung und einer gemeinsamen Kanalleistung durchführt; und
eine Steuereinheit (202), die dazu ausgelegt ist, eine Sendeleistung jeder Zelle zu steuern, dass sie nicht größer als ein erster Schwellenwert ist, wobei
die Steuereinheit (202) ferner für Folgendes ausgelegt ist: Zuteilen, wenn der gleiche Sektor sich in einem Anfangszustand befindet, einer ersten Leistung zu jeder Zelle gemäß einer ersten Zuteilungsrichtlinie, wobei die erste Zuteilungsrichtlinie Zuteilen der Leistung zu jeder Zelle in absteigender Reihenfolge der Prioritäten der Zellen in einem gleichen Verhältnis, oder Zuteilen einer Grundleistung zu jeder Zelle umfasst, wobei die Grundleistung einem Diensttyp und einem Netzwerktyp entspricht; und
Zuteilen, wenn der gleiche Sektor sich in einem verbundenen Modus befindet, einer zweiten Leistung zu jeder Zelle gemäß einer aktuellen Leistung und einer erforderlichen Leistungsnutzungsrate, die von jeder Zelle stammen, so dass eine mittlere Leistung jeder Zelle nicht größer als ein zweiter Schwellenwert ist,
**gekennzeichnet dadurch,**
**dass** die Steuereinheit (202) ein zweites Steuermodul (2022) umfasst, wobei das Steuermodul ferner dazu ausgelegt ist, das zweite Steuermodul zu betreiben, wenn die Verarbeitungseinheit (201) bestimmt, dass eine Summe der Leistungsnutzungsraten aller Zellen in dem gleichen Sektor nicht kleiner als die maximale Sendeleistung ist, und wobei
das zweite Steuermodul (2022) für Folgendes ausgelegt ist: nachdem die Verarbeitungseinheit (201) bestimmt, dass eine erste Zelle, deren Leistungsnutzungsrate größer als oder gleich dem zweiten Schwellenwert ist, und eine zweite Zelle, deren Leistungsnutzungsrate kleiner als ein dritter Schwellenwert ist, vorhanden sind, eine dritte Leistung der ersten Zelle und eine vierte Leistung der zweiten Zelle gemäß einer ersten Richtlinie zu reduzieren, wobei das zweite Steuermodul (2022) speziell für Folgendes ausgelegt ist:
Berechnen, mit Hilfe der Verarbeitungseinheit (201), eines ersten Gesamtleistungswertes, der reduziert werden muss; Berechnen einer Summe der dritten Leistung und der vierten Leistung, um einen zweiten Gesamtleistungswert zu erhalten;
Reduzieren der dritten Leistung gemäß dem ersten Gesamtleistungswert und gemäß einem Verhältnis der dritten Leistung zu dem zweiten Gesamtleistungswert; und
Reduzieren der vierten Leistung gemäß einem Verhältnis der vierten Leistung zu dem zweiten Gesamtleistungswert.

## Revendications

1. Procédé de gestion de puissance de cellule, le procédé étant appliqué à un nœud de réseau gérant une puissance d'un même secteur, le même secteur comprenant des cellules multiples, le même secteur appartenant au nœud de réseau, et le procédé comprenant :
la configuration (101), par le nœud de réseau, d'une puissance de transmission maximale du même secteur, et la commande d'une puissance de transmission de chaque cellule pour qu'elle ne soit pas supérieure à un premier seuil, le nœud de réseau ne réalisant pas la commande de puissance sur une puissance de porteuse de bande primaire GSM, une puissance de canal pilote LTE, une puissance de canal pilote UMTS, et une puissance de canal commun ;
l'attribution (102), par le nœud de réseau lorsque le même secteur se trouve dans un état initial, d'une première puissance à chaque cellule en fonction d'une première politique d'attribution, la première politique d'attribution comprenant l'attribution de puissance à chaque cellule suivant un ordre descendant de priorités des cellules à un rapport égal ou l'attribution d'une puissance de base à chaque cellule, où la puissance de base correspond à un type de service et à un type de réseau ; et
l'attribution (103), par le nœud de réseau lorsque le même réseau se trouve dans un mode connecté, d'une deuxième puissance à chaque cellule en fonction d'une puissance actuelle et d'un taux d'utilisation de puissance requis qui relèvent de chaque cellule, de sorte qu'une puissance moyenne de chaque cellule ne soit pas supérieure à un deuxième seuil,
**caractérisé par**
lorsque le nœud de réseau détermine qu'une somme de taux d'utilisation de puissance de toutes les cellules dans le même secteur n'est pas inférieure à la puissance de transmission maximale, l'attribution, par le nœud de réseau, d'une deuxième puissance à chaque cellule en fonction d'une puissance actuelle et d'un taux d'utilisation de puissance requis qui relèvent de chaque cellule comprend de manière spécifique un des cas suivants :
la réduction d'un taux d'utilisation de puissance d'origine de chaque cellule suivant un ordre descendant de priorités des cellules à un rapport égal ; ou
la détermination d'une première cellule dont le taux d'utilisation de puissance est supérieur ou égal au deuxième seuil et d'une deuxième cellule dont le taux d'utilisation de puissance est inférieur à un troisième seuil ; et la réduction d'une troisième puissance de la première cellule et d'une quatrième puissance de la deuxième cellule en fonction d'une première politique, la réduction d'une troisième puissance de la première cellule et d'une quatrième puissance de la deuxième cellule en fonction d'une première politique comprenant de manière spécifique :
le calcul d'une première valeur de puissance totale qui a besoin d'être réduite, et le calcul d'une somme de la troisième puissance et de la quatrième puissance afin d'obtenir une deuxième valeur de puissance totale ;
la réduction de la troisième puissance en fonction de la première valeur de puissance totale et en fonction d'un rapport de la troisième puissance à la deuxième valeur de puissance totale ; et
la réduction de la quatrième puissance en fonction d'un rapport de la quatrième puissance à la deuxième valeur de puissance totale.

2. Premier nœud de réseau, le nœud de réseau étant configuré pour commander une puissance d'un même secteur, le même secteur comprenant des cellules multiples, le même secteur appartenant au nœud de réseau, et le nœud de réseau comprenant :
une unité de traitement (201), configurée pour configurer une puissance de transmission maximale du même secteur, le nœud de réseau ne réalisant pas la commande de puissance sur une puissance de porteuse de bande primaire GSM, une puissance de canal pilote LTE, une puissance de canal pilote UMTS, et une puissance de canal commun ; et
une unité de commande (202), configurée pour commander une puissance de transmission de chaque cellule pour qu'elle ne soit pas supérieure à un premier seuil, dans lequel
l'unité de commande (202) est configurée en outre pour : attribuer, lorsque le même secteur se trouve dans un état initial, une première puissance à chaque cellule en fonction d'une première politique d'attribution, la première politique d'attribution comprenant l'attribution de puissance à chaque cellule suivant un ordre descendant de priorités des cellules à un rapport égal ou l'attribution d'une puissance de base à chaque cellule, où la puissance de base correspond à un type de service et à un type de réseau ; et
attribuer, lorsque le même réseau se trouve dans un mode connecté, une deuxième puissance à chaque cellule en fonction d'une puissance actuelle et d'un taux d'utilisation de puissance requis qui relèvent de chaque cellule, de sorte qu'une puissance moyenne de chaque cellule ne soit pas supérieure à un deuxième seuil,
**caractérisé en ce**
**que** l'unité de commande (202) comprend un premier module de commande (2021), le module de commande (202) étant configuré en outre pour opérer le premier module de commande (2021), lorsque l'unité de traitement (201) détermine qu'une somme de taux d'utilisation de puissance de toutes les cellules dans le même secteur n'est pas inférieure à la puissance de transmission maximale, et dans lequel
le premier module de commande (2021) est configuré pour réduire un taux d'utilisation de puissance d'origine de chaque cellule suivant un ordre descendant de priorités des cellules à un rapport égal.

3. Deuxième nœud de réseau, le nœud de réseau étant configuré pour commander une puissance d'un même secteur, le même secteur comprenant des cellules multiples, le même secteur appartenant au nœud de réseau, et le nœud de réseau comprenant :
une unité de traitement (201), configurée pour configurer une puissance de transmission maximale du même secteur, le nœud de réseau ne réalisant pas la commande de puissance sur une puissance de porteuse de bande primaire GSM, une puissance de canal pilote LTE, une puissance de canal pilote UMTS, et une puissance de canal commun ; et
une unité de commande (202), configurée pour commander une puissance de transmission de chaque cellule pour qu'elle ne soit pas supérieure à un premier seuil, dans lequel
l'unité de commande (202) est configurée en outre pour : attribuer, lorsque le même secteur se trouve dans un état initial, une première puissance à chaque cellule en fonction d'une première politique d'attribution, la première politique d'attribution comprenant l'attribution de puissance à chaque cellule suivant un ordre descendant de priorités des cellules à un rapport égal ou l'attribution d'une puissance de base à chaque cellule, où la puissance de base correspond à un type de service et à un type de réseau ; et
attribuer, lorsque le même réseau se trouve dans un mode connecté, une deuxième puissance à chaque cellule en fonction d'une puissance actuelle et d'un taux d'utilisation de puissance requis qui relèvent de chaque cellule, de sorte qu'une puissance moyenne de chaque cellule ne soit pas supérieure à un deuxième seuil,
**caractérisé en ce**
**que** l'unité de commande (202) comprend un deuxième module de commande (2022), le module de commande étant configuré en outre pour opérer le deuxième module de commande, lorsque l'unité de traitement (201) détermine qu'une somme de taux d'utilisation de puissance de toutes les cellules dans le même secteur n'est pas inférieure à la puissance de transmission maximale, et dans lequel le deuxième module de commande (2022) est configuré pour : après que l'unité de traitement (201) détermine qu'une première cellule dont le taux d'utilisation de puissance est supérieur ou égal au deuxième seuil et qu'une deuxième cellule dont le taux d'utilisation de puissance est inférieur à un troisième seuil, réduire une troisième puissance de la première cellule et une quatrième puissance de la deuxième cellule en fonction d'une première politique, le deuxième module de commande (2022) étant configuré de manière spécifique pour :
calculer, grâce à l'utilisation de l'unité de traitement (201), une première valeur de puissance totale qui a besoin d'être réduite ; calculer une somme de la troisième puissance et de la quatrième puissance afin d'obtenir une deuxième valeur de puissance totale ;
réduire la troisième puissance en fonction de la première valeur de puissance totale et en fonction d'un rapport de la troisième puissance à la deuxième valeur de puissance totale ; et
réduire la quatrième puissance en fonction d'un rapport de la quatrième puissance à la deuxième valeur de puissance totale.
